# EUROPEAN PATENT SPECIFICATION

(11) **EP 1 598 135 B1**
(45) Date of publication and mention of the grant of the patent: **10.09.2008**
(21) Application number: 04252932.1
(22) Date of filing: 18.05.2004
(51) Int. Cl.: B23D 49/16, B23D 51/02

(54) **Support assembly for output shaft of reciprocating power tool**
Haltevorrichtung für die Ausgangswelle eines hin- und herbewegbaren Kraftwerkzeugs
Ensemble support pour l'arbre de sortie d'un outil motorisé animé d'un mouvement alternatif

(43) Date of publication of application: 23.11.2005
(73) Proprietor: Black & Decker Inc., Newark, Delaware 19711 (US)
(72) Inventor: Million, Phil Black & Decker, County Durhram DL16 6JG (GB)
(74) Representative: Shaya, Darrin Maurice

(56) References cited:
- EP-A- 1 260 299
- DE-A- 3 608 301
- GB-A- 2 394 692

## Description

The present invention relates to a support assembly according to the preamble of claim 1 for an output shaft of a jigsaw, and relates particularly, but not exclusively, to a support assembly for an output shaft of a jigsaw having a scrolling mode (i.e. in which an output shaft supporting a jigsaw blade can rotate about its longitudinal axis relative to the jigsaw housing) and an orbital mode (i.e. in which the output shaft is pivotable relative to the housing about an axis transverse to its longitudinal axis, so that an oscillating motion is superimposed on the axial reciprocating motion of the jigsaw blade).

A jigsaw having scrolling and orbital modes is disclosed in EP 0158325. However, such jigsaws suffer from the drawback that the jigsaw blade is not provided with any further support in the vicinity of the base plate of the jigsaw which rests on a workpiece being cut, as a result of which it is difficult to minimise displacement of the jigsaw blade away from its intended line of cutting.

DE 3608301 discloses a support assembly according to the preamble of claim 1 for an output shaft of a jigsaw comprising: a support housing; a first bearing arranged in the support housing and adapted to support an output shaft of the jigsaw for reciprocating movement of the output shaft along a first axis relative to said bearing and to substantially prevent movement of the output shaft relative to said first bearing in a direction transverse to said first axis; and at least one support member adapted to abut a working member of the jigsaw when mounted to the output shaft during reciprocating movement of the working member to resist displacement of said working member relative to said output shaft in at least one direction transverse to said first axis as a result of engagement of a workpiece by the working member.

The present invention seeks to overcome the above disadvantages of the prior art.

According to the present invention, there is provided a support assembly for an output shaft of a jigsaw, the support assembly comprising the features of claim 1.

By providing at least one support member which can pivot to a limited extent relative to said first bearing about at least one second axis transverse to said first axis, this provides the advantage that transmission of torque applied by the or each support member via the first bearing to the output shaft is minimised. This in turn provides the advantage of minimising the extent to which reaction forces applied by a workpiece to the working member increase the friction between the output shaft and the first bearing, which could cause frictional heating between the output shaft and the first bearing, which can in turn cause fusing of the output shaft to the first bearing.

Said first bearing includes at least one protrusion and/or recess for engaging a corresponding recess and/or protrusion on at least one said support member to allow said support member to pivot about a said second axis to a limited extent relative to said first bearing and to substantially prevent pivoting of said first bearing about said first axis relative to the or each said support member.

This provides the advantage of simplifying manufacture and assembly of an arrangement in which limited pivoting of the or each support member about a said second axis is possible relative to the first bearing, but the first bearing rotates with the or each support member relative to the tool housing about the first axis, for example in the scrolling mode of a jigsaw.

Preferred embodiments of the invention are defined by the dependent claims.

At least one said support member or said first bearing may have a plurality of said protrusions defining grooves for engaging corresponding ribs on at least one said support member or first bearing.

In a preferred embodiment, said first bearing is adapted to engage part of said output shaft having a non-circular cross-section in a direction transverse to said first axis, and said ribs extend in use transversely to a major cross-sectional dimension of said part of said output shaft.

This provides the advantage of enabling those parts which allow limited pivoting of the or each support member relative to said first bearing to be more compactly constructed.

At least one said support member may include a roller having a groove therein for engaging the working member of the jigsaw.

The assembly may further comprise a second bearing arranged in the support housing and adapted to support the output shaft for reciprocating movement of the output shaft along said first axis relative to said second bearing and to substantially prevent movement of the output shaft relative to said second bearing in a direction transverse to said first axis.

At least one said support member may be adapted to pivot about said first axis relative to said support housing.

This provides the advantage of enabling operation of a scrolling mode when the tool is a jigsaw.

At least one said support member may have at least one protrusion and/or recess for engaging a corresponding recess and/or protrusion on said support housing for allowing rotation of said support member relative to the support housing about said first axis.

This provides the advantage of enabling simple construction of an arrangement allowing rotation of at least one said support member relative to the support housing about the first axis, while counteracting rotation of the or each said support member about the second axis relative to the support housing.

The assembly may further comprise an output shaft slideably mounted to said first bearing for reciprocating movement along said first axis.

The assembly may further comprise mounting means for mounting a working member of the jigsaw to said output shaft.

The mounting means may comprise clamping means.

In a preferred embodiment, there is provided a jigsaw having a tool housing, a motor arranged in the tool housing, an output shaft adapted to be driven in a reciprocating motion relative to the tool housing by means of the motor and to support a working member of the jigsaw for reciprocating motion of the working member relative to the tool housing, and a support assembly as defined above.

The support assembly may be adapted to pivot relative to the tool housing about a third axis transverse to said first axis.

This provides the advantage of providing an orbital mode when the tool is a jigsaw.

Preferred embodiments of the invention will now be described, by way of example only and not in any limitative sense, with reference to the accompanying drawings, in which:-
Figure 1 is a cross-sectional elevation view of a jigsaw embodying the present invention;
Figure 2 is a perspective view of a blade support assembly, jigsaw blade and scrolling knob of the jigsaw of Figure 1;
Figure 3 (a) is a perspective view of an upper bearing of the blade support assembly of Figure 2;
Figure 3(b) is a front view of the upper bearing of Figure 3(a);
Figure 3(c) is a top view of the upper bearing of Figure 3(a);
Figure 3(d) is a side view of the upper bearing of Figure 3(a);
Figure 3(e) is a bottom view of the upper bearing of Figure 3(a);
Figure 3(f) is a side cross sectional view of the upper bearing of Figure 3(a);
Figure 4 is a side view of the blade support assembly, jigsaw blade and scrolling knob of Figure 2, together with a drive mechanism of the jigsaw of Figure 1, but having an alternative embodiment of scroll selector to the arrangement shown in Figure 1;
Figure 5(a) is a perspective view of the scroller knob and scroller locking mechanism of Figure 4 in a scrolling mode of the jigsaw;
Figure 5(b) is a perspective view, corresponding to Figure 5(a) of the scroller knob and scroller locking mechanism in a conventional mode of the jigsaw;
Figure 5(c) is a perspective view, corresponding to Figure 5(a) of the scroller knob and scroller locking mechanism in an orbital mode of the jigsaw;
Figure 6(a) is a front view of a scotch yoke, output shaft and blade clamp of the blade support assembly of Figure 2;
Figure 6(b) is a perspective view of the scotch yoke, output shaft and blade clamp of Figure 6(a);

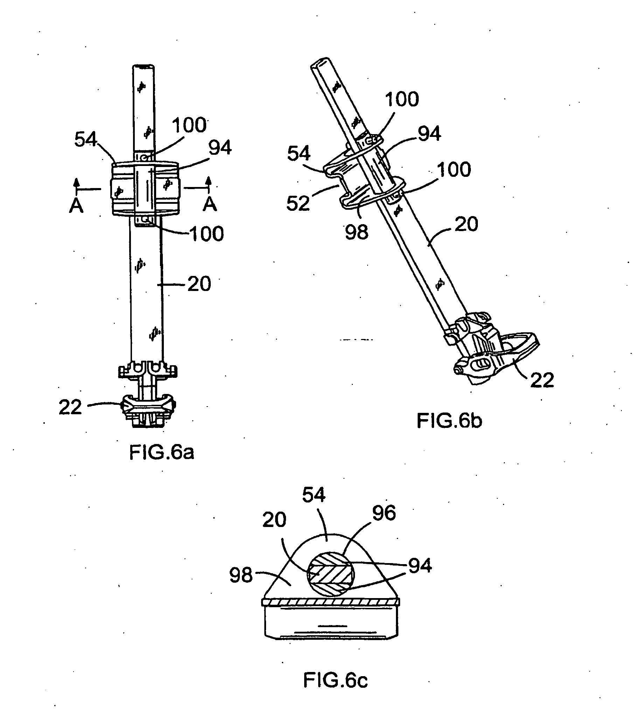

Figure 6(c ) is a top view of the scotch yoke of Figures 6(a) and 6(b);

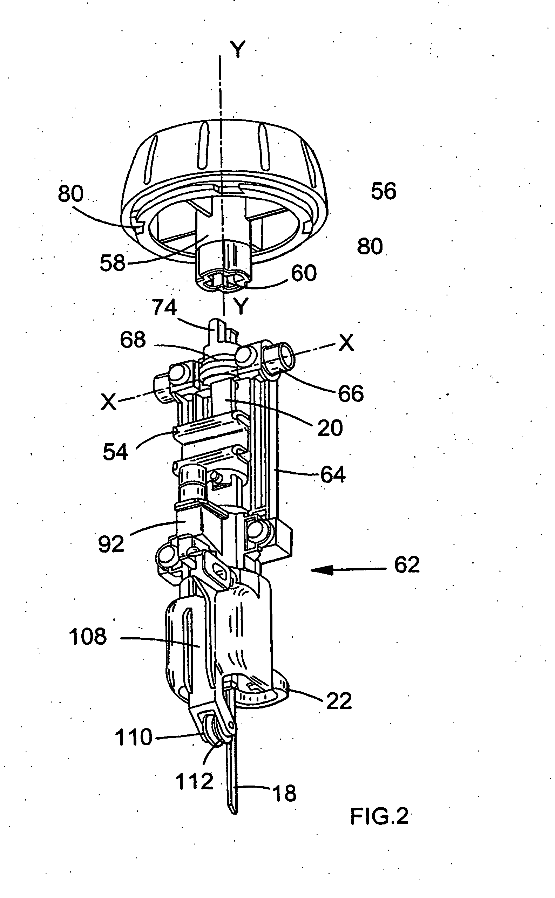

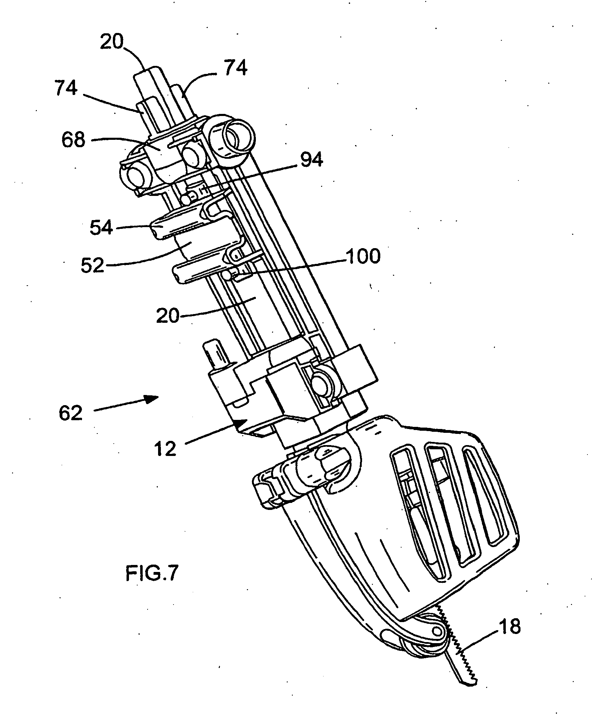

Figure 7 is a perspective view of the blade support assembly of Figure 2;

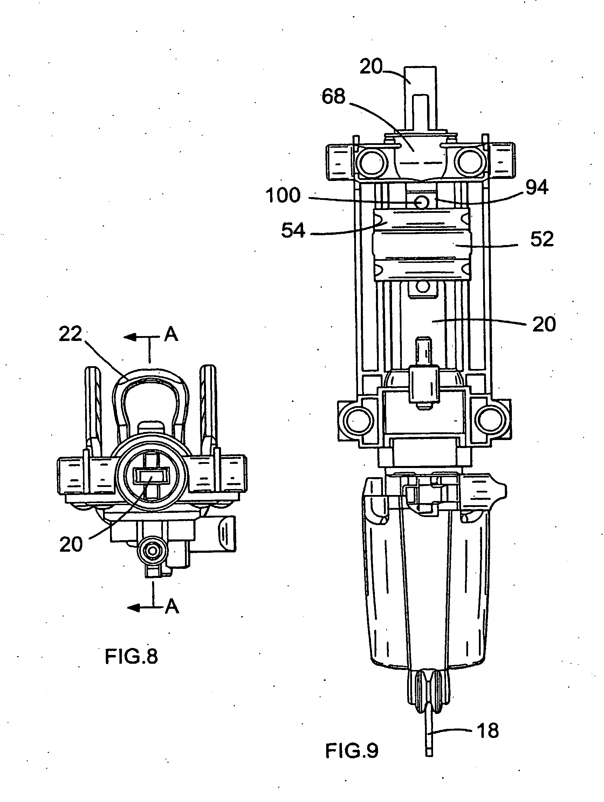

Figure 8 is a top view of the blade support assembly of Figure 7;
Figure 9 is a rear view of the blade support assembly of Figure 7;

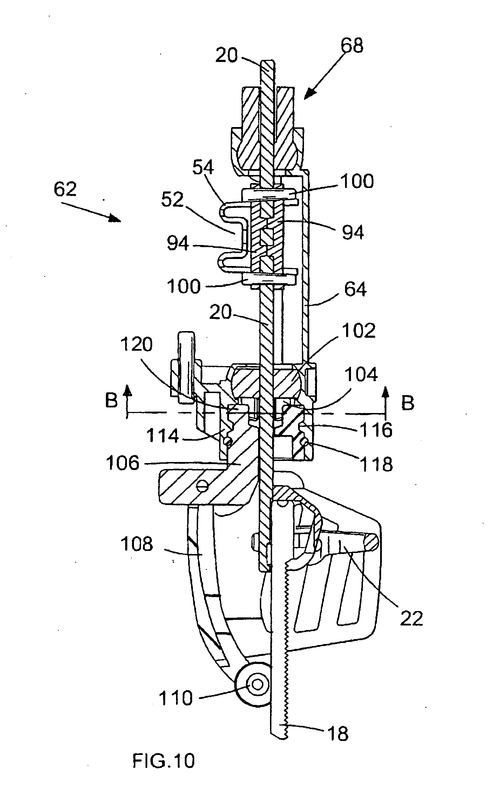

Figure 10 is a side cross sectional view along the line A-A in Figure 8;

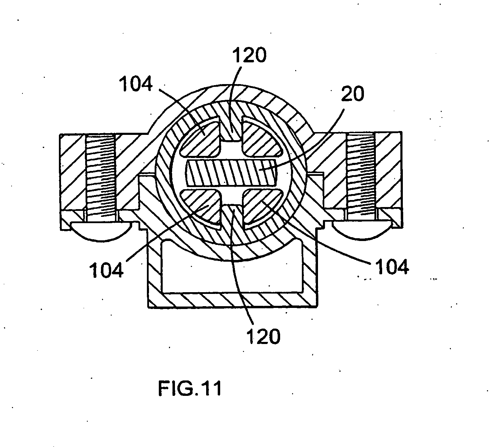

Figure 11 is a view along the line B-B in Figure 10;

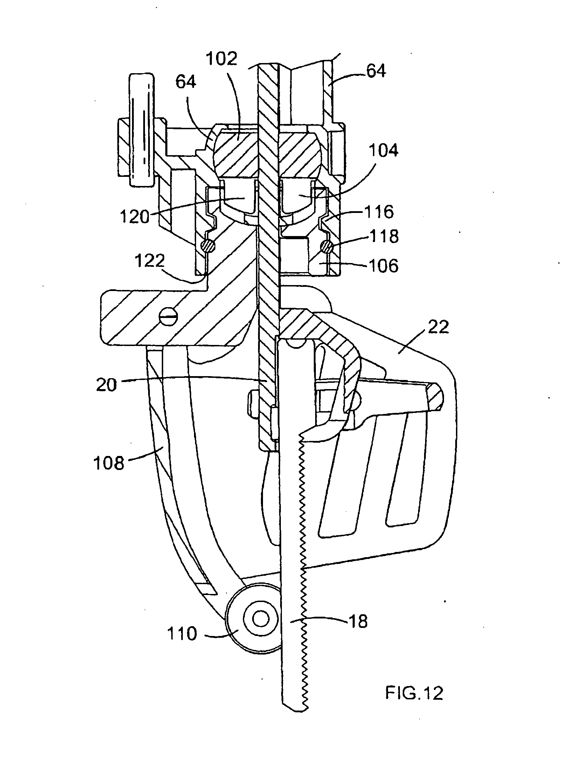

Figure 12 is an enlarged view of the lower part of the blade support assembly of Figure 10 when the blade is not cutting a workpiece; and

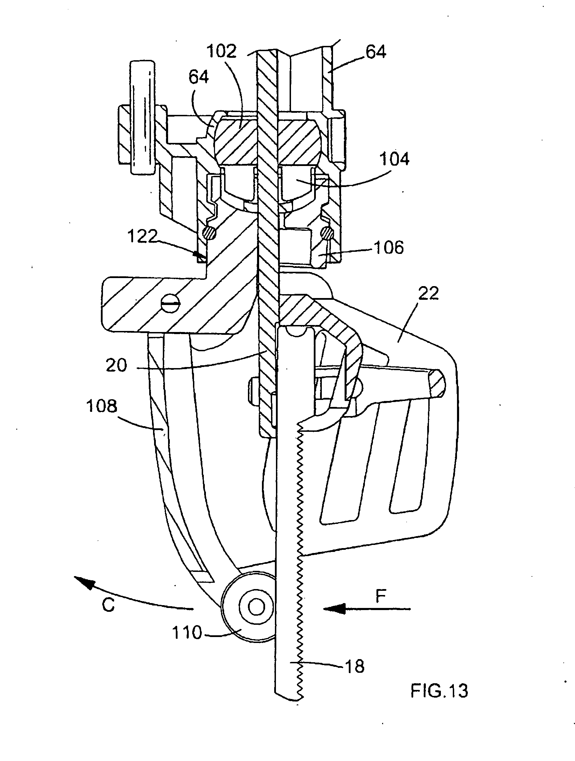

Figure 13 is a view corresponding to Figure 12 when the blade is cutting a workpiece.

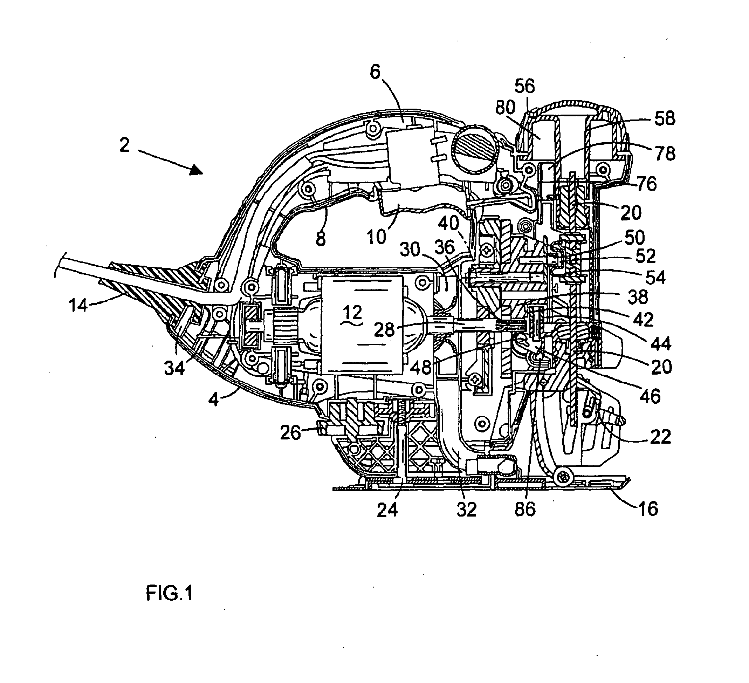

Referring to Figure 1, a jigsaw 2 has a housing 4 comprising two clam shell halves 6 (only one of which is shown in Figure 1) defining a handle 8 having a trigger switch 10 for operating a motor 12 supplied with electrical power via a cable 14. A shoe 16 for resting on a workpiece (not shown) is located at a lower part of the housing 4, and a jigsaw blade 18 (Figure 2) is attached to the lower end of an output shaft 20 by means of a blade clamp mechanism 22. The operation of the blade clamp mechanism 22 is not relevant to an understanding of the present invention and will therefore not be described in greater detail herein. The orientation of the shoe 16 is adjustable relative to the housing 4 to enable bevel cutting, and can be fixed by means of a clamping screw 24 operated by a locking mechanism 26, which is also not relevant to an understanding of the present invention and will therefore not be described in greater detail.

The motor 12 drives a shaft 28 which carries a fan 30. When the fan 30 rotates, air is expelled via duct 32 and may be used to blow sawdust away from the vicinity of blade 18, and draws air through inlets 34 in housing 4 to cool motor 12. The shaft 28 carries a pinion 36 which meshes with a drive gear 38 mounted about axis 40, the gear 38 carrying a cam surface 42 on its front face. A cam follower 44 is selectively engageable with cam surface 42 by means of cam portion 46 of scroll selector 48 to operate an orbital mode of the jigsaw in a manner which will be described in greater detail below. The gear 38 also carries an eccentric pin 50 which slidably fits in a slot 52 of scotch yoke mechanism 54 mounted to output shaft 20.

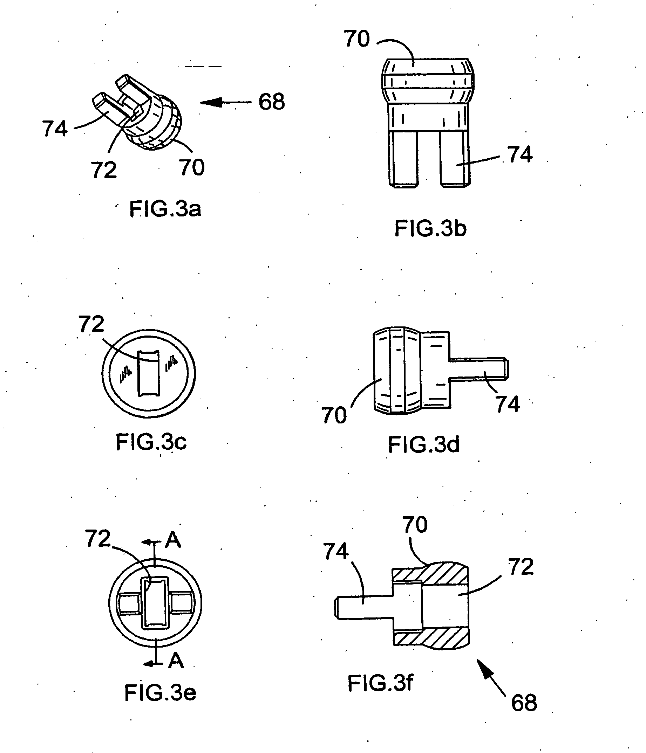

Referring now to Figure 2, a scroller knob 56 is rotatably mounted to the housing 4 for adjusting the orientation of the blade 18 relative to the housing 4. The scroller knob 56 has a collar portion 58 having a cruciform bore 60 therein, the purpose of which is described in greater detail below. A blade support assembly 62 has a support housing 64 having trunnions 66 which are received in corresponding recesses (not shown) in housing 4 to enable the assembly 62 to pivot about axis X-X relative to the housing 4 in the orbital mode of the jigsaw. An upper bearing 68 (Figure 3) has a partially spherical portion 70 which is rotatable about axis Y-Y relative to support housing 64, and has a slot 72 therethrough for receiving the output shaft 20 such that the output shaft 20 can slide in the direction of axis Y-Y relative to the upper bearing 68, but is prevented from moving relative to the bearing 68 in a direction transverse to the axis Y-Y. The upper bearing 68 also has a pair of legs 74 which are received in cruciform bore 60 of scroller knob 56 such that the bearing 68 (and therefore the output shaft 20) rotates with the scroller knob 56 about axis Y-Y, but limited pivoting movement of the bearing 68 about axis X-X relative to the scroller knob 56 is permitted.

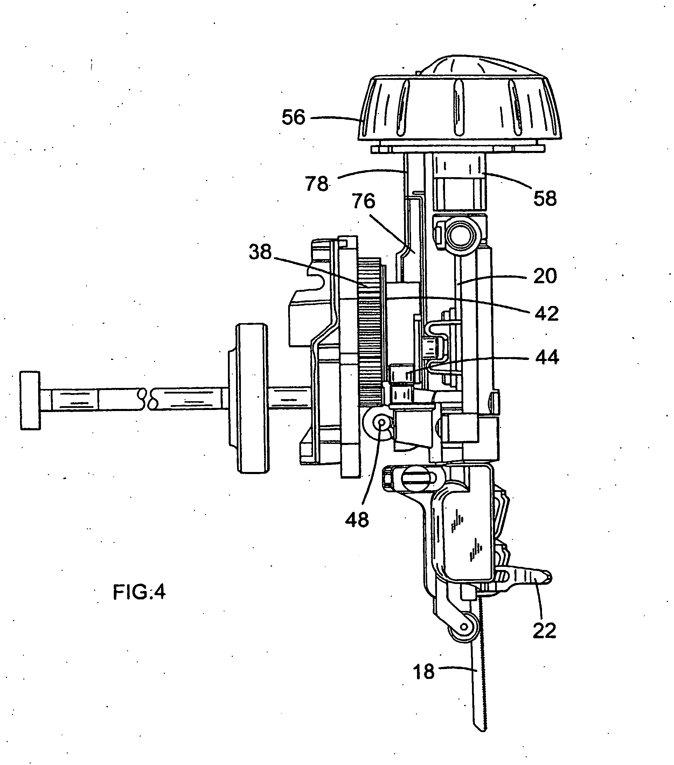

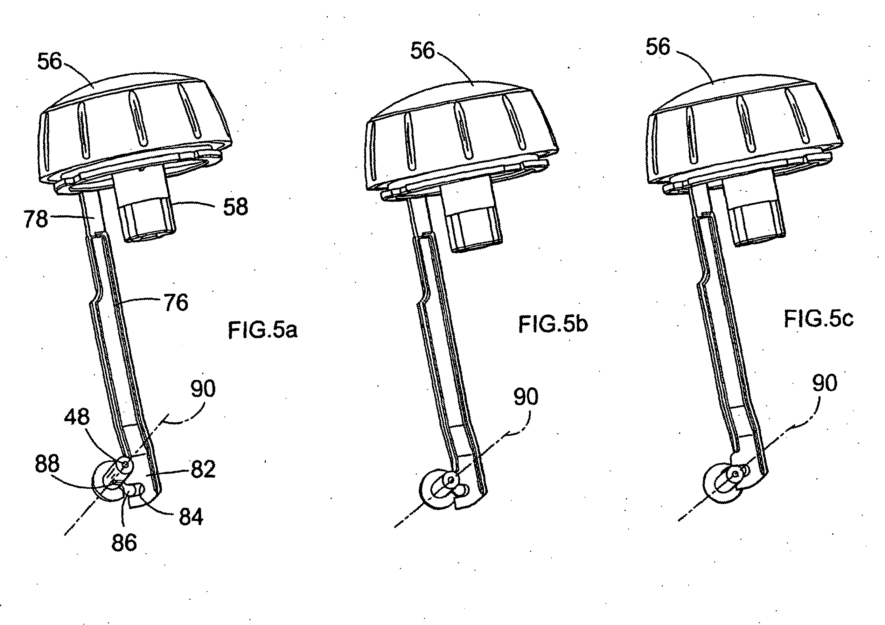

A mechanism for selecting between the scrolling, orbital and conventional modes of the jigsaw is shown in detail with reference to Figures 4 and 5. A locking arm 76 is slidably mounted to the housing 4 and is moveable between a lower position, as shown in Figure 5(a) in which the scroller knob 56 can rotate relative to the housing 4, and two upper positions shown in Figures 5(b) and 5(c ) in which an upper end 78 of the locking arm 76 is received in one or more slots 80 in the underside of scroller knob 56 to prevent rotation of the scroller knob 56 about avis Y-Y relative to the housing 4. The scroll selector 48 is rotatably mounted to the housing 4 and can be rotated by means of a mode selector knob (not shown) on the housing 4, and a lower end 82 of locking arm 76 has a rounded slot 84 which receives a rounded tooth 86 provided on scroll selector 48 such that rotation of scroll selector 48 relative to the housing 4 causes movement of the locking arm 76 parallel to the axis Y-Y. The scroll selector 48 also carries a cam surface, which is a protrusion 46 in the embodiment of Figure 1 and a groove 88 in the embodiment of Figures 5(a) to 5(c).

Referring now to Figures 5(a) to 5(c), in the position shown in Figure 5(a), the rotational position of scroll selector 48 about axis 90 relative to the housing 4 is such that the upper end 78 of locking arm 76 is not receiving in any of the grooves 80 in scroller knob 56, as a result of which the scroller knob 56 (and therefore also the output shaft 20 and jigsaw blade 18) can rotate about axis Y-Y relative to the housing 4 to permit scrolling motion of the blade 18. At the same time, it is desirable to prevent orbital motion of the blade 18 when the jigsaw is in the scroller mode, since it is difficult to operate the jigsaw in the orbital mode when the orientation of the blade 18 relative to the housing 4 is not forwards. This is achieved in the position shown in Figure 5(a) because the lower part 82 of locking arm 76 is not received within recess 88, as a result of which the locking arm 76 is urged forwards relative to the scroll selector 48. This in turn abuts lower portion 92 (Figure 2) of support housing 64, which causes the support assembly 62 to pivot forwards against the action of a spring (not shown) about axis X-X so that cam follower 44 is held out of engagement with cam face 42 on gear 38. As a result, pendulum motion cannot be imparted to the support assembly 62 as the gear 38 rotates.

As the scroll selector 48 is rotated anticlockwise about axis 90 to the position shown in Figure 5(b), engagement of tooth 86 with slot 84 causes the locking arm 76 to move upwards so that its upper end 78 is received in a slot 80 in scrolling knob 56 to prevent rotation of the scrolling knob 56 relative to the housing 4. At the same time, the lower end 82 of the locking arm 76 is still not received in recess 88, as a result of which the cam follower 44 is still held out of engagement with the cam surface 42 on gear 38, so pendulum action cannot be imparted to the support assembly 62.

As the scroll selector 48 is further rotates anticlockwise about axis 90 to the position shown in Figure 5(c ), the upper end 78 of locking arm 76 is received further in groove 80, but the lower end 82 of locking arm 76 is now received in recess 88 on scroll selector 48 As a result, the support assembly 62 and locking arm 76 can pivot under the action of the spring (not shown) to bring the cam follower 44 into engagement with cam surface 42 on gear 38, so that pendulum action is imparted to the support assembly 62 as the gear 38 is rotated by motor 12. It can therefore be seen that the scrolling mode is not permitted when the orbital mode is active, and vice versa. By operating the locking arm 76 by means of the engagement of a tooth 86 in a groove 84 (as opposed to cooperating rack and pinion), this provides the advantage of significantly simplifying manufacture and assembly of the scroll locking mechanism, which in turn reduces the cost of production of the jigsaw.

Referring now to Figures 6(a) to 6(c), the output shaft 20 is of rectangular cross section along most of its length. This provides the advantage that the ends of the shaft 20 can be non-rotatably mounted to adjacent parts without the need to provide cross pins (which-would be necessary in the case of a shaft of circular cross section) trough the shaft which would need to fit into slots at least as deep as the distance of travel of the cross pins during reciprocating motion of the shaft 20. As a result, the parts of the jigsaw at the ends of the shaft 20 can me made of significantly more compact construction than is the case with a shaft of circular cross section.

In order to enable rotation of the shaft 20 relative to the scotch yoke 54 in scrolling mode of the jigsaw, a pair of generally D-shaped inserts 94 are mounted on opposite sides of the shaft 20 to provide that part of the shaft with a partially circular external cross section, and the scotch yoke 54 is rotatably mounted to the shaft 20 by means of circular apertures 96 in upper and lower flanges 98 of the scotch yoke 54. The scotch yoke 54 is then fixed to the shaft 20 by means of pins 100 through D-shaped inserts 94 and shaft 20 so that the scotch yoke 54 cannot move axially relative to the shaft 20, but can pivot about relative to the shaft so that the slot 52 of scotch yoke 54 continues to face eccentric pin 50 (Figure 1) regardless of the orientation of the blade 18 relative to the housing 4. This enables the blade 18 to be driven in a reciprocating manner when the jigsaw is in the scroller mode.

The support assembly 62 of Figure 2 is shown in detail in Figures 7 to 13. A lower bearing 102 is rotatably mounted about the longitudinal axis of the output shaft 20 to the support housing 64 and has a slot, similar to the slot 72 in upper bearing 68, for slidably receiving the shaft 20 so that the shaft can execute reciprocating axial movement relative to the bearings 68, 102, but is prevented from moving in a direction transverse to its longitudinal axis. The lower bearing 102 has four protruding legs 104 at its lower end, so that a cruciform slot (Figure 11) is defined between the-legs 104 for receiving the shaft 20 and for cooperating with ribs 120 provided on a control bearing 106 such that the control bearing 106 rotates with the lower bearing 102 and output shaft 20 as the output shaft rotates about its longitudinal axis. The control bearing 106 is rotatably mounted to support housing 64 by means of engagement of a flange 116 on support housing 64 with a groove in control bearing 106.

The control bearing 106 has a support arm 108 which carries a blade support roller 110 at a distal end thereof. The blade support roller 110 has a groove 112 (Figure 1) for receiving the rear face of jigsaw blade 18. Because the control bearing 106 is rotatably mounted to support housing 64, the blade support roller 110 remains in contact with the jigsaw blade 18 in the scrolling, orbital and conventional modes of the jigsaw. The lower bearing 102, control bearing 106 and support housing 64 are so dimensioned that limited pivoting of control bearing 106 relative to lower bearing 102 is possible about an axis transverse to the longitudinal axis of the shaft 20, and limited movement of the control bearing 106 relative to the support housing 64 is possible, with movement due to clearance 122 between control bearing 106 and support housing 64 being taken up by an elastomeric seal 118, which also prevents leakage of lubricant from the interior of the support assembly 62.

Referring now in detail to Figures 12 and 13, when the jigsaw is used to cut a workpiece (not shown), the reaction force from the workpiece acting on the blade 18 tends to cause the blade 18 to pivot clockwise relative to the shaft 20 form the position shown in Figure 12 to that shown in Figure 13. As a result, a turning moment is applied via blade support roller 110 to the support arm 108 in the direction of arrow C shown in via blade support roller 110 to the support arm 108 in the direction of arrow C shown in Figure 13. This turning moment is opposed by an opposite turning moment applied to the control bearing 106 by the support housing 64 as the clearance 122 is reduced from the arrangement shown in Figure 12 to that shown in Figure 13.

However, as a result if the limited pivoting movement permitted between control bearing 106 and lower bearing 102, the turning moment applied by the support arm 108 to the support housing 64 is not transferred to the lower bearing 102, and is therefore not transferred to the shaft 20. The therefore provides the advantage that frictional forces between the lower bearing 102 and shaft 20 are not increased as a result if reaction force F (Figure 13) acting on blade support roller 110.

It will be appreciated by persons skilled in the art that the above embodiments have been described by way of example only, and not in any limitative sense, and that various alterations and modifications are possible without departure from the scope of the invention as defined by the appended claims.

## Claims

1. A support assembly (62) for an output shaft (20) of a jigsaw having a tool housing (4), a motor (12) arranged in the tool housing (4), and an output shaft (20) adapted to be driven in a reciprocating motion relative to the tool housing (4) by means of the motor (12) and to support a working member (18) of the jigsaw for reciprocating motion of the working member (18) relative to the tool housing (4), the support assembly (62) comprising:-
a support housing (64);
a first bearing (102) arranged in the support housing (64) and adapted to support an output shaft (20) of the jigsaw (2) for reciprocating movement of the output shaft (20) along a first axis relative to said first bearing (102) and to substantially prevent movement of the output shaft (20) relative to said first bearing (102) in a direction transverse to said first axis; and
at least one support member (106, 108, 110) adapted to abut a working member (18) of the jigsaw (2) when mounted to the output shaft (20) during reciprocating movement of the working member (18) to resist displacement of said working member (18) relative to said output shaft (20) in at least one direction transverse to said first axis as a result of engagement of a workpiece by the working member (18);
**characterised in that** said first bearing (102) includes at least one protrusion (104) and/or recess for engaging a corresponding recess and/or protrusion (120) on at least one said support member (106, 108, 110) to allow said support member (106, 108, 110) to pivot about at least one second axis transverse to said first axis to a limited extent relative to said first bearing (102) to minimise the extent to which a force applied to the or each said support member (106, 108, 110) by said working member (18) in use thereof causes said first bearing (102) to apply a turning moment to said output shaft (20) about an axis transverse to said first axis, and to substantially prevent pivoting of said first bearing (102) about said first axis relative to the or each said support member (106, 108, 110).

2. An assembly according to claim 1, wherein at least one said support member (106, 108, 110) or said first bearing (102) has a plurality of said protrusions defining grooves for engaging corresponding ribs (120) on at least one said support member (106, 108, 110) or first bearing (102).

3. An assembly according to claim 2, wherein said first bearing (102) is adapted to engage part of said output shaft (20) having a non-circular cross-section in a direction transverse to said first axis, and said ribs (120) extend in use transversely to a major cross-sectional dimension of said part of said output shaft (20).

4. An assembly according to any one of the preceding claims, wherein at least one said support member (106, 108, 110) includes a roller (110) having a groove (112) therein for engaging the working member (18) of the jigsaw (2).

5. An assembly according to any one of the preceding claims, further comprising a second bearing (68) arranged in the support housing (64) and adapted to support the output shaft (20) for reciprocating movement of the output shaft (20) along said first axis relative to said second bearing (68) and to substantially prevent movement of the output shaft (20) relative to said second bearing (68) in a direction transverse to said first axis.

6. An assembly according to any one of the preceding claims, wherein at least one said support member (106, 108, 110) is adapted to pivot about said first axis relative to said support housing (64).

7. An assembly according to claim 6, wherein at least one said support member (106, 108, 110) has at least one protrusion and/or recess for engaging a corresponding recess and/or protrusion (116) on said support housing (64) for allowing rotation of said support member (106, 108, 110) relative to the support housing (64) about said first axis.

8. An assembly according to any one of the preceding claims, wherein said output shaft (20) is slidably mounted to said first bearing (102) for reciprocating movement along said first axis.

9. An assembly according to claim 8, further comprising mounting means (22) for mounting a working member (18) of the jigsaw (2) to said output shaft (20).

10. An assembly according to claim 9, wherein the mounting means (22) comprises clamping means.

11. A jigsaw (2) having a tool housing (4), a motor (12) arranged in the tool housing (4), an output shaft (20) adapted to be driven in a reciprocating motion relative to the tool housing (4) by means of the motor (12) and to support a working member (18) of the jigsaw (2) for reciprocating motion of the working member (18) relative to the tool housing (4), and a support assembly (62) according to any one of the preceding claims.

12. A jigsaw (2) according to claim 11, wherein the support assembly (62) is adapted to pivot relative to the tool housing (4) about a third axis transverse to said first axis.

## Patentansprüche

1. Haltevorrichtung (62) für eine Ausgangswelle (20) einer Stichsäge, die ein Werkzeuggehäuse (4), einen Motor (12), der in dem Werkzeuggehäuse (4) angeordnet ist, und eine Ausgangswelle (20) aufweist, die angepasst ist, in einer hin- und hergehenden Bewegung relativ zu dem Werkzeuggehäuse (4) durch den Motor (12) angetrieben zu werden und um ein Arbeitselement (18) der Stichsäge für eine hin- und hergehende Bewegung des Arbeitselements (18) relativ zu dem Werkzeuggehäuse (4) zu halten, wobei die Haltevorrichtung (62) aufweist:
ein Haltegehäuse (64),
ein erstes Lager (102), das in dem Haltegehäuse (64) angeordnet und angepasst ist, eine Ausgangswelle (20) der Stichsäge (2) für eine hin- und hergehende Bewegung der Ausgangswelle (20) entlang einer ersten Achse relativ zu dem ersten Lager (102) zu halten und im Wesentlichen eine Bewegung der Ausgangswelle (20) relativ zu dem ersten Lager (102) in einer Richtung quer zu der ersten Achse zu verhindern, und
wenigstens ein Halteelement (106, 108, 110), das angepasst ist, um an einem Arbeitselement (18) der Stichsäge (2) anzuliegen, wenn es an der Ausgangswelle (20) während einer hin- und hergehenden Bewegung des Arbeitselements (18) angebracht ist, um einer Verlagerung des Arbeitselements (18) relativ zu der Ausgangswelle (20) in wenigstens einer Richtung quer zu der ersten Achse als ein Ergebnis eines Eingriffs eines Werkstücks mit dem Arbeitselement (18) entgegenzuwirken,
**dadurch gekennzeichnet, dass** das erste Lager (102) wenigstens einen Vorsprung (104) und/oder eine Aussparung zum Eingriff mit einer entsprechenden Aussparung und/oder einem entsprechenden Vorsprung (120) an wenigstens einem der Halteelemente (106, 108, 110) umfasst, um dem Halteelement (106, 108, 110) zu ermöglichen, um wenigstens eine zweite Achse quer zu der ersten Achs in einem begrenzten Ausmaß relativ zu dem ersten Lager (102) zu schwenken, um das Ausmaß zu minimieren, um das eine Kraft, die auf das oder jedes Halteelement (106, 108, 110) durch das Arbeitselement (18) bei dessen Verwendung ausgeübt wird, das erste Lager (102) veranlasst, ein Drehmoment auf die Ausgangswelle (20) um eine Achse quer zu der ersten Achse auszuüben, und um im Wesentlichen ein Schwenken des ersten Lagers (102) um die erste Achse relativ zu dem oder jedem Halteelement (106, 108, 120) zu verhindern.

2. Vorrichtung nach Anspruch 1, wobei wenigstens eines der Halteelemente (106, 108, 120) oder das erste Lager (102) eine Vielzahl der Vorsprünge aufweist, die Nuten zum Eingreifen entsprechender Rippen (102) an wenigstens einem der Halteelemente (106, 108, 110) oder dem ersten Lager (102) bilden.

3. Vorrichtung nach Anspruch 2, wobei das erste Lager (102) angepasst ist, um mit einem Teil der Ausgangswelle (20), der einen nicht kreisförmigen Querschnitt in einer Richtung quer zu der ersten Achse hat, einzugreifen, und wobei die Rippen (120) sich bei der Benutzung quer zu einer größeren Querschnittsabmessung des Teils der Ausgangswelle (20) erstrecken.

4. Vorrichtung nach einem der vorhergehenden Ansprüche, wobei wenigstens eines der Halteelemente (106, 108, 110) eine Rolle (110) mit einer Nut (112) darin zum Eingriff mit dem Arbeitselement (18) der Stichsäge (2) umfasst.

5. Vorrichtung nach einem der vorhergehenden Ansprüche, ferner mit einem zweiten Lager (68), das in dem Haltegehäuse (64) angeordnet und angepasst ist, die Ausgangwelle (20) für eine hin- und hergehende Bewegung der Ausgangswelle (20) entlang der ersten Achse relativ zu dem zweiten Lager (68) zu halten und um im Wesentlichen eine Bewegung der Ausgangswelle (20) relativ zu dem zweiten Lager (68) in einer Richtung quer zu der ersten Achse zu verhindern.

6. Vorrichtung nach einem der vorhergehenden Ansprüche, wobei wenigstens eines der Halteelemente (106, 108, 110) angepasst ist, um um die erste Achse relativ zu dem Haltegehäuse (64) zu schwenken.

7. Vorrichtung nach Anspruch 6, wobei zumindest eines der Halteelemente (106, 108, 110) zumindest einen Vorsprung und/oder eine Aussparung zum Eingriff mit einer entsprechenden Aussparung und/oder einem entsprechenden Vorsprung (116) an dem Haltegehäuse (64) aufweist, um eine Drehung des Halteelements (106, 108, 110) relativ zu dem Haltegehäuse (64) um die erste Achse zu ermöglichen.

8. Vorrichtung nach einem der vorhergehenden Ansprüche, wobei die Ausgangswelle (20) verschiebbar zu dem ersten Lager (102) angebracht ist, um eine hin- und hergehende Bewegung entlang der ersten Achse zu ermöglichen.

9. Vorrichtung nach Anspruch 8, ferner mit Befestigungsmitteln (22) zum Befestigen eines Arbeitselements (18) der Stichsäge (2) an der Ausgangswelle (20).

10. Vorrichtung nach Anspruch 9, wobei die Befestigungsmittel (22) Klemmmittel umfassen.

11. Stichsäge (2) mit einem Werkzeuggehäuse (4), einem Motor (12), der in dem Werkzeuggehäuse (4) angeordnet ist, einer Ausgangswelle (20), die angepasst ist, in einer hin- und hergehenden Bewegung relativ zu dem Werkzeuggehäuse (4) mittels des Motors (12) angetrieben zu werden und ein Arbeitselement (18) der Stichsäge (2) für eine hin- und hergehende Bewegung des Arbeitselements (18) relativ zu dem Werkzeuggehäuse (4) zu halten, und mit einer Haltevorrichtung (62) nach einem der vorhergehenden Ansprüche.

12. Stichsäge (2) nach Anspruch 11, wobei die Haltevorrichtung (62) angepasst ist, relativ zu dem Werkzeuggehäuse (4) um eine dritte Achse quer zu der ersten Achse zu schwenken.

## Revendications

1. Ensemble support (62) pour un arbre de sortie (20) d'une scie sauteuse possédant un logement d'outil (4), un moteur (12) agencé dans le logement d'outil (4), et un arbre de sortie (20) adapté pour être entraîné dans un mouvement en va-et-vient par rapport au logement d'outil (4) au moyen du moteur (12) et pour supporter un élément d'usinage (18) de la scie sauteuse pour un mouvement en va-et-vient de l'élément d'usinage (18) par rapport au logement d'outil (4), l'ensemble support (62) comprenant :
un logement de support (64) ;
un premier palier (102) agencé dans le logement de support (64) et adapté pour supporter un arbre de sortie (20) de la scie sauteuse (2) pour un mouvement en va-et-vient de l'arbre de sortie (20) le long d'un premier axe par rapport audit premier palier (102) et pour empêcher sensiblement le mouvement de l'arbre de sortie (20) par rapport audit premier palier (102) dans une direction transversale audit premier axe ; et
au moins un élément de support (106, 108, 110) adapté pour prendre appui sur un élément d'usinage (18) de la scie sauteuse (2) lorsqu'il est monté sur l'arbre de sortie (20) au cours du mouvement en va-et-vient de l'élément d'usinage (18) pour résister au déplacement dudit élément d'usinage (18) par rapport audit arbre de sortie (20) dans au moins une direction transversale audit premier axe en conséquence de l'engagement d'une pièce à usiner par l'élément d'usinage (18) ;
**caractérisé en ce que** ledit premier palier (102) comprend au moins une protubérance (104) et/ou un évidement pour engager un évidement correspondant et/ou une protubérance correspondante (120) sur au moins un dit élément de support (106, 108, 110) pour permettre audit élément de support (106, 108, 110) de pivoter autour d'au moins un deuxième axe transversale audit premier axe dans une mesure limitée par rapport audit premier palier (102) pour minimiser la mesure selon laquelle une force appliquée sur le ou chaque dit élément de support (106, 108, 110) par ledit élément d'usinage (18) durant l'utilisation de celui-ci fait en sorte que ledit premier palier (102) applique un moment rotatif sur ledit arbre de sortie (20) autour d'un axe transversal audit premier axe, et pour empêcher sensiblement le pivotement dudit premier palier (102) autour dudit premier axe par rapport au ou à chaque dit élément de support (106, 108, 110).

2. Ensemble selon la revendication 1, dans lequel au moins un dit élément de support (106, 108, 110) ou ledit premier palier (102) possède une pluralité desdites protubérances définissant des rainures pour engager des nervures correspondantes (120) sur au moins un dit élément de support (106, 108, 110) ou premier palier (102).

3. Ensemble selon la revendication 2, dans lequel ledit premier palier (102) est adapté pour engager une partie dudit arbre de sortie (20) possédant une section transversale non circulaire dans une direction transversale audit premier axe, et lesdites nervures (120) s'étendent durant l'utilisation transversalement à une dimension de section transversale majeure de ladite partie dudit arbre de sortie (20).

4. Ensemble selon l'une quelconque des revendications précédentes, dans lequel au moins un dit élément de support (106, 108, 110) comprend un rouleau (110) possédant une rainure (112) dans celui-ci pour engager l'élément d'usinage (18) de la scie sauteuse (2).

5. Ensemble selon l'une quelconque des revendications précédentes, comprenant en outre un second palier (68) agencé dans le logement de support (64) et adapté pour supporter l'arbre de sortie (20) pour le mouvement en va-et-vient de l'arbre de sortie (20) le long dudit premier axe par rapport audit second palier (68) et pour empêcher sensiblement le mouvement de l'arbre de sortie (20) par rapport audit second palier (68) dans une direction transversale audit premier axe.

6. Ensemble selon l'une quelconque des revendications précédentes, dans lequel au moins un dit élément de support (106, 108, 110) est adapté pour pivoter autour dudit premier axe par rapport audit logement de support (64).

7. Ensemble selon la revendication 6, dans lequel au moins un dit élément de support (106, 108, 110) possède au moins une protubérance et/ou évidement pour engager un évidement correspondant et/ou une protubérance correspondante (116) sur ledit logement de support (64) pour permettre la rotation dudit élément de support (106, 108, 110) par rapport au logement de support (64) autour dudit premier axe.

8. Ensemble selon l'une quelconque des revendications précédentes, dans lequel ledit arbre de sortie (20) est monté de façon coulissante sur ledit premier palier (102) pour un mouvement en va-et-vient le long dudit premier axe.

9. Ensemble selon la revendication 8, comprenant en outre des moyens de montage (22) pour monter un élément d'usinage (18) de la scie sauteuse (2) sur ledit arbre de sortie (20).

10. Ensemble selon la revendication 9, dans lequel les moyens de montage (22) comprennent des moyens de serrage.

11. Scie sauteuse (2) possédant un logement d'outil (4), un moteur (12) agencé dans le logement d'outil (4), un arbre de sortie (20) adapté pour être entraîné dans un mouvement en va-et-vient par rapport au logement d'outil (4) au moyen du moteur (12) et pour supporter un élément d'usinage (18) de la scie sauteuse (2) pour un mouvement en va-et-vient de l'élément d'usinage (18) par rapport au logement d'outil (4), et un ensemble support (62) selon l'une quelconque des revendications précédentes.

12. Scie sauteuse (2) selon la revendication 11, dans laquelle l'ensemble support (62) est adapté pour pivoter par rapport au logement d'outil (4) autour d'un troisième axe transversale audit premier axe.
